# EUROPÄISCHE PATENTSCHRIFT

(11) **EP 0 600 267 B1**
(45) Veröffentlichungstag und Bekanntmachung des Hinweises auf die Patenterteilung: **28.01.1998**
(21) Anmeldenummer: 93118078.0
(22) Anmeldetag: 08.11.1993
(51) Int. Cl.: H04B 10/24

(54) **Bidirektionaler optischer Sende- und Empfangsmodul**
Optical bidirectional transmit/receive module
Module optique émetteur-récepteur bidirectionnel

(30) Priorität: 03.12.1992 DE 4240737
(43) Veröffentlichungstag der Anmeldung: 08.06.1994
(73) Patentinhaber: SIEMENS AKTIENGESELLSCHAFT, 80333 München (DE)
(72) Erfinder: Heinen, Jochen, Dr., D-85540 Haar (DE)

(56) Entgegenhaltungen:
- EP-A- 0 187 198
- EP-A- 0 234 280
- DE-A- 3 731 311
- PATENT ABSTRACTS OF JAPAN vol. 16, no. 117 (P-1328)24. März 1992 & JP-A-03 287 207 (HITACHI)
- PATENT ABSTRACTS OF JAPAN vol. 11, no. 337 (P-633)5. November 1987 & JP-A-62 121 409 (HITACHI)

## Beschreibung

Die vorliegende Erfindung betrifft eine Anordnung eines bidirektionalen optischen Sende- und Empfangsmoduls für Anschluß an eine zum Senden und Empfangen gemeinsam benutzte Glasfaser.

In der optoelektronischen Nachrichtentechnik werden Sendemodule und Empfangsmodule zweckmäßigerweise derart kombiniert, daß dieselbe Glasfaser für das Sende- und für das Empfangssignal verwendet werden kann. Bei den bidirektionalen Modulen sind mindestens eine Laserdiode als Sender und eine Fotodiode als Empfänger so anzuordnen, daß mittels geeigneter reflektierender oder filternder Zwischenelemente eine optische Verbindung des Glasfaseranschlusses sowohl mit der Laserdiode als auch mit der Fotodiode realisierbar ist. Der technische Aufwand bei der Montage einer derartigen Anordnung ist erheblich.

In der Patentschrift EP-A-0187198 wird eine Anordnung beschrieben, bei der eine Laserdiode und ein Fotodetektor zusammen mit einem Streifenwellenleiter auf einem gemeinsamen Substrat integriert sind. Gemäß einer Ausführungsform sind die Laserdiode und der Streifenwellenleiter auf einer Seite des Substrats und der Fotodetektor auf der gegenüberliegenden Seite des Substrats angeordnet, wobei der Fotodetektor durch ein Umlenkelement an den Streifenwellenleiter gekoppelt ist, welches die im Wellenleiter geführte Strahlung aus dem Wellenleiter durch das Substrat zum Fotodetektor lenkt. Das Substrat ist für die im Streifen geführte Strahlung durchlässig.

Aufgabe der vorliegenden Erfindung ist es, eine Anordnung für einen bidirektionalen optischen Sende- und Empfangsmodul anzugeben, die einfach herstellbar ist und ggf. mit weiteren Sende-, Empfangs- oder Ansteuerkomponenten kombiniert werden kann.

Diese Aufgabe wird mit der Anordnung mit den Merkmalen des Anspruches 1 gelöst. Weitere Ausgestaltungen ergeben sich aus den abhängigen Ansprüchen.

Bei der erfindungsgemäßen Anordnung verläuft der Strahlengang zwischen dem Anschluß für die Glasfaser und den optoelektronischen Sende- und Empfangselementen durch ein Substrat, auf dessen gegenüberliegender Oberseite die Strahlung mittels Spiegeln parallel zur Substratoberfläche umgelenkt und in streifenförmigen Wellenleitern geführt wird. Die eine Oberseite des Substrates trägt daher die verschiedenen Funktionselemente, während die gegenüberliegende Seite die streifenförmigen Wellenleiter trägt, die die optischen Verbindungen herstellen.

Es folgt eine Beschreibung der erfindungsgemäßen Anordnung anhand der Figuren 1 bis 4.
- Fig. 1 und 3: zeigen zwei Ausführungsformen der erfindungsgemäßen Anordnung im Querschnitt.
- Fig. 2 und 4: zeigen die den Fig. 1 bzw. 3 entsprechenden Anordnungen in Aufsicht.

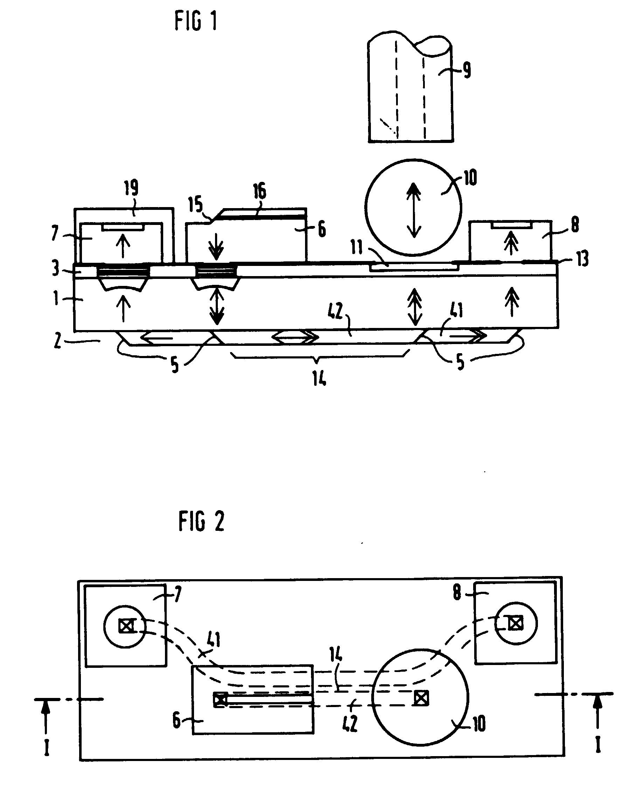

In Fig. 1 ist das Substrat 1 eingezeichnet, das eine Halbleiterscheibe oder allgemein eine Materialplatte mit ausreichender mechanischer Stabilität und optischer Transparenz sein kann. Auf der einen Oberseite dieses Substrates 1 ist eine Wellenleiterschicht 2 aus streifenförmigen Wellenleitern 41, 42 aufgebracht. Vorteilhafte Materialien für das Substrat 1 sind beispielsweise Silizium, GaAs oder InP. Die Wellenleiterschicht 2 enthält z. B. vergrabene Wellenleiter oder Stegwellenleiter die aus den dem jeweiligen Substrat 1 entsprechenden Halbleitermaterialien hergestellt sind. Die Wellenleiter 41, 42 sind in an sich bekannter Weise aus unterschiedlich dotiertem Halbleitermaterial mit unterschiedlicher, z. B. ternärer oder quaternärer, Kristallzusammensetzung (z. B. GaAlAs/GaAs, InGaAsP, InGaAlAs) hergestellt. Es können auch Dielektrika (z. B. dotiertes oder undotiertes SiO₂) verwendet werden. An Enden der Wellenleiter 41, 42 befinden sich Spiegel 5, die derart schräg angeordnet sind, daß Strahlung aus dem Substrat 1 in einen Wellenleiter eingekoppelt wird und Strahlung aus einem Wellenleiter in das Substrat reflektiert wird. Die Spiegel 5 sind vorzugsweise etwa 45° gegenüber der Ausbreitungsrichtung der Strahlung in den Wellenleitern 41, 42 geneigt, so daß der Lichteintritt und Lichtaustritt in bzw. aus dem für die Strahlung transparenten Substrat 1 etwa senkrecht zu der Wellenleiterschicht 2 erfolgt. Die Umlenkung der Strahlung an den Spiegeln 5 erfolgt dabei durch Totalreflexion. Bei Verwendung von Halbleitermaterial für das Substrat 1 und für die Wellenleiterschicht 2 ist die Reflexion am Übergang zwischen dem Wellenleitermaterial und dem Substratmaterial vernachlässigbar. Im Falle der Verwendung von SiO₂-Wellenleitern auf einem Siliziumsubstrat ist an der Übergangsfläche vorteilhaft eine Antireflexschicht oder Antireflexschichtfolge anzubringen.

Auf der gegenüberliegenden Oberseite des Substrates 1 sind mindestens eine Laserdiode 6 als Sender und eine Fotodiode 7 als Empfänger angeordnet. Außerdem befindet sich auf dieser Seite ein Anschluß für einen externen Wellenleiter, z. B. eine Glasfaser 9. Der Strahlengang des aus dieser Glasfaser 9 in die Anordnung gelangenden Lichtes ist mit einfachen Pfeilen bezeichnet. Die von der Laserdiode 6 ausgesandte Strahlung ist jeweils mit Doppelpfeilen bezeichnet. Fig. 2 zeigt eine Aufsicht auf diese Anordnung. Es ist erkennbar, daß die Strahlung aus der Glasfaser 9 in den Wellenleiter 42 umgelenkt und darin weitergeführt wird. Ein Teil der Strahlung wird in dem Koppler 14 in einen zweiten Wellenleiter 41 übergekoppelt und am Ende dieses Wellenleiters 41 durch einen Spiegel 5 nach der Fotodiode 7 hin umgelenkt. In der Fotodiode 7 wird diese Strahlung empfangen. Die Strahlung von der Laserdiode 6 gelangt in den Wellenleiter 42 und zumindest ein Teil dieser Strahlung von da in die Glasfaser 9.

Wenn die Sendewellenlange und die Empfangswellenlänge verschieden sind, können in den Strahlengang vor die Laserdiode 6 und vor die Fotodiode 7 jeweils für die andere Wellenlänge undurchlässige Filter eingebaut sein. Auf diese Weise erreicht man, daß die zu empfangende Wellenlänge nicht die Laserdiode 6 erreicht und daß eine von der Laserdiode 6 ausgesandte Wellenlänge nicht von der Fotodiode 7 detektiert wird. Für derartige Filter ist die zusätzliche Anordnung einer Filterschicht 3 zweckmäßig. Die Filter können aber auch an der betreffenden Oberfläche des Substrates 1 integriert sein. Die Laserdiode 6 ist vorzugsweise ein oberflächenemittierender Halbleiterlaser, der direkt auf das Substrat oder die erwähnte Filterschicht 3 montiert ist. In Fig. 1 ist eine kantenemittierende Laserdiode 6 mit einer aktiven Schicht 16 und einem Umlenkspiegel 15 gezeichnet. Zur Erhöhung des Einkoppelwirkungsgrades und der Justiertoleranz kann der Laser zusätzlich über eine integrierte Mikrolinse verfügen. Zusätzliche Mikrolinsen 12, die an der Oberseite des Substrates 1 vor der Laserdiode .6 und vor der Fotodiode 7 angeordnet sind, sind in Fig. 1 ebenfalls eingezeichnet. Die Wärmeabfuhr des Lasers erfolgt durch das Substrat 1 bzw. über die Filterschicht 3. Optisches Übersprechen zwischen der Laserdiode 6 und der Fotodiode 7 kann zusätzlich durch Umschließen der Fotodiode 7 mit lichtundurchlässigem Material 19 verringert werden. Die der Wellenleiterschicht 2 gegenüberliegende Oberfläche des Substrates 1 kann mit einer Metallschicht 13 versehen sein, die Öffnungen für ein ungehindertes Passieren der Strahlung aufweist. Mit dieser Metallschicht 13 wird Streulicht abgeschirmt und eine Montagefläche für die auf dieser Metallschicht 13 aufgebrachten Funktionselemente (Laserdiode 6, Fotodiode 7) gebildet. Außerdem wird durch das Metall eine Äquipotentialfläche gebildet, die gegen elektrisches Übersprechen zwischen der Laserdiode 6 und der Fotodiode 7 elektrisch geerdet werden kann.

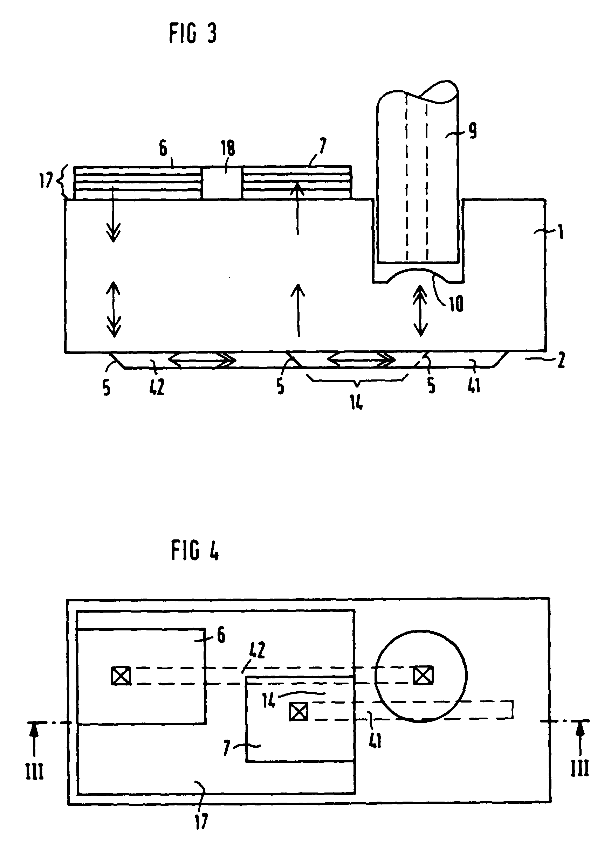

Die erfindungsgemäße Anordnung zeichnet sich durch eine einfache, kompakte Bauweise aus, die leicht aus wenigen Teilen zusammengesetzt und justiert werden kann. Sie kann mit einer einfachen Oberflächenmontage, wie sie von Infrarotdioden bekannt ist, in Modulgehäuse eingebaut und mit der Glasfaser 9 verbunden werden. Eine bei dieser Technik über dem für den Anschluß der Glasfaser vorgesehenen Bereich hinzuzufügende Kugellinse 10 (s. Fig. 1) oder Linsenplatte (Fresnel-, Mikrolinsen) kann ebenfalls auf der Oberfläche des Substrates 1 montiert werden. In Fig. 1 ist für den Lichteintritt aus dieser Kugellinse 10 in das Substrat 1 eine Antireflexionsschicht 11, die in der Filterschicht 3 ausgebildet ist, eingezeichnet. Fig. 3 zeigt eine Anordnung, bei der die Glasfaser 9 unmittelbar in einer Aussparung des Substrates 1 eingesetzt wird, wobei die Einkoppelfläche mit einer integrierten Linse 10 aus dem Substratmaterial gebildet wird. Bei der erfindungsgemäßen Anordnung ergibt sich keine Einschränkung dafür, wie der externe Wellenleiter angeschlossen wird. Deswegen sind in Fig. 1 keine weiteren Teile für die Montage der Glasfaser 9 und der Kugellinse 10 eingezeichnet. In Fig. 3 ist eine vereinfachte Anordnung dargestellt, bei der keine Filterschicht 3 und keine Metallschicht 13 vorhanden ist. Die Laserdiode 6 und die Fotodiode 7 sind in einer auf die Oberseite des Substrates 1 aufgewachsenen Schichtfolge 17 aus Halbleitermaterial integriert. Der Zwischenbereich 18 dieser Schichtfolge 17 zwischen der Laserdiode 6 und der Fotodiode 7 ist elektrisch und optisch isolierend. Aus der Aufsicht dieser Anordnung in Fig. 4 ist erkennbar, daß die Anordnung der streifenförmigen Wellenleiter 41, 42 bei diesem Ausführungsbeispiel anders ist. Der Strahlengang der ankommenden Strahlung (einfache Pfeile) und der ausgesandten Strahlung (Doppelpfeile) verläuft wieder über die Wellenleiter 41, 42 und wird mittels Spiegeln 5 umgelenkt. Durch die Figuren soll verdeutlicht werden, daß bei der erfindungsgemäßen Anordnung die Abmessungen und Abstände der Komponenten nicht festgelegt sind. Der Abstand zwischen Laserdiode 6 und Fotodiode 7 und die Form der Wellenleiter 41, 42 und die Lage des Anschlusses für den externen Wellenleiter sind variabel. Das Substrat 1 kann weitere Komponenten enthalten, die optisch über Wellenleiter miteinander verbunden werden, wobei das Ein- und Auskoppeln von Licht nicht grundsätzlich über schräge Spiegel 5 erfolgen muß, sondern z. B. auch in herkömmlicher Technik mit Linsen, Tapern oder in Stoßkopplung oder Leckwellenkopplung erfolgen kann.

Eine besonders vorteilhafte Ausgestaltung der erfindungsgemäßen Anordnung sieht eine der Kontrolle der Laserdiode 6 dienende Monitordiode 8 vor. Diese Monitordiode 8 ist wie in Fig. 1 gezeichnet so angeordnet, daß ihr über einen Wellenleiter 41 ein Anteil des von der Laserdiode 6 ausgesandten Lichtes zugeführt wird. In Fig. 2 ist erkennbar, daß der besagte Anteil bei diesem Ausführungsbeispiel mittels des Kopplers 14 aus dem Wellenleiter 42, der die Laserdiode 6 optisch mit dem Anschluß für die Glasfaser verbindet, in den Wellenleiter 41 übergekoppelt wird und von da in die Monitordiode 8 gelangt. Das Ausführungsbeispiel der Fig. 3 enthält keine Monitordiode 8. Das entsprechende Ende des Wellenleiters 41 ist blind.

Bei einer Verbindung des Glasfaseranschlusses mit der Laserdiode 6 und mit der Fotodiode 7 werden bei streifenförmigen Wellenleitern mit zwei Enden mindestens zwei Wellenleiter benötigt. Eine Kopplung dieser Wellenleiter kann über einen bekannten Wellenleiterkoppler erfolgen. Es ist auch möglich, daß beide Wellenleiter in einen gemeinsamen Streifen zusammengeführt werden (Y-förmige Verzweigung, die im Sinn des Anspruches 1 als Koppler aufzufassen ist), was insbesondere bei dem Ausführungsbeispiel der Fig. 3 und 4 realisiert ist, wenn das blinde Ende des Wellenleiters 41 in den Wellenleiter 42 einmündet. Eine einfache Anordnung ergibt sich, wenn möglichst wenige Wellenleiter miteinander verkoppelt werden müssen. Für eine effiziente Einkopplung der von der Laserdiode 6 ausgesandten Strahlung mit möglichst hoher Sendeleistung in die Glasfaser 9 ist eine direkte optische Verbindung der Laserdiode 6 mit dem Anschluß über einen gemeinsamen Wellenleiter 42 vorteilhaft. Falls eine Monitordiode 8 vorgesehen ist, ist es vorteilhaft, wenn für die übrigen beiden Komponenten, nämlich die Fotodiode 7 und diese Monitordiode 8, wieder ein gemeinsamer Wellenleiter 41, der mit dem anderen Wellenleiter 42 verkoppelt ist, vorgesehen ist. Alternativ dazu können die Fotodiode 7 und der Anschluß für den externen Wellenleiter über einen gemeinsamen Wellenleiter optisch miteinander verbunden sein. Das von der Laserdiode 6 kommende Licht wird in einen weiteren Wellenleiter umgelenkt und in den mit der Glasfaser optisch verbundenen Wellenleiter eingekoppelt. Diese Anordnung kann von Vorteil sein, wenn die ankommende Strahlung keine für ein effizientes Überkoppeln ausreichende Leistung besitzt.

Die erfindungsgemäße Anordnung eignet sich für eine Betriebsweise, bei der die Wellenlängen der empfangenen und der ausgesandten Strahlung nicht deutlich voneinander verschieden sind oder bei der Senden und Empfangen nicht gleichzeitig erfolgen (sogenannter Ping-Pong-Betrieb).

Die erfindungsgemäße Anordnung läßt sich auch auf den Einsatz mehrerer Empfangs- und Sendeelemente erweitern. Weitere Funktionselemente, wie z. B. Verstärker oder Ansteuerschaltungen, lassen sich zusätzlich montieren oder gemeinsam mit der in den Ausführungsbeispielen gezeichneten Laserdiode 6 und der Fotodiode 7 in oder auf das Substrat 1 integrieren. Ein besonderer Vorteil der Anordnung ist, daß die eine Oberseite des Substrates ausschließlich für die Wellenleiter vorgesehen bleibt und alle übrigen Elemente auf der gegenüberliegenden Oberfläche einfach aufgewachsen oder montiert werden können. Weitere dem Filtern, Bündeln oder Abschirmen der Strahlung dienende Einrichtungen lassen sich bequem in oder auf das Substrat integrieren.

## Patentansprüche

1. Anordnung als bidirektionaler optischer Sende- und Empfangsmodul mit einem für optische Strahlung durchlässigen Substrat (1), mit mindestens zwei streifenförmigen Wellenleitern (41, 42), mit einem Anschluß für einen externen Wellenleiter (9) und mit mindestens einer Laserdiode (6) und einer Fotodiode (7),
bei der diese Wellenleiter (41, 42) auf einer Oberseite des Substrates (1) für Wellenführung parallel zu dieser Oberseite angeordnet sind,
bei der Enden dieser Wellenleiter (41, 42) mit Spiegeln (5) versehen sind, die so ausgerichtet sind, daß Strahlung zwischen Wellenleiter und Substrat reflektiert wird,
bei der dieser Anschluß, diese Laserdiode (6) und diese Fotodiode (7) auf der gegenüberliegenden Oberseite des Substrates (1) angeordnet und so ausgerichtet sind, daß von diesem externen Wellenleiter (9) oder von dieser Laserdiode (6) ausgehende Strahlung durch das Substrat (1) jeweils zu einem dieser Spiegel (5) am Ende eines Wellenleiters (42) gelangt und daß aus einem Wellenleiter (41) kommende Strahlung von einem dieser Spiegel (5) zu der Fotodiode (7) reflektiert wird, und bei der mindestens ein Koppler (14) zwischen zwei Wellenleitern (41, 42) derart vorgesehen ist, daß der Anschluß optisch mit der Laserdiode (6) und mit der Fotodiode (7) verbunden ist.

2. Anordnung nach Anspruch 1,
bei der eine weitere Fotodiode als Monitordiode (8) für die Laserdiode (6) vorgesehen ist,
bei der diese Monitordiode (8) auf derselben Oberfläche des Substrates (1) angeordnet ist wie die Laserdiode (6) und bei der ein Teil der von der Laserdiode (6) ausgesandten Strahlung von einem Spiegel (5) an einem Ende eines Wellenleiters (41) in diese Monitordiode (8) reflektiert wird.

3. Anordnung nach Anspruch 1 oder 2,
bei der die Laserdiode (6) und der Anschluß über denselben Wellenleiter (42) optisch verbunden sind.

4. Anordnung nach den Ansprüchen 1 bis 3,
bei der die Fotodiode (7) und die Monitordiode (8) über denselben Wellenleiter (41) optisch verbunden sind.

5. Anordnung nach einem der Ansprüche 1 bis 4,
bei der die Laserdiode (6) und die Fotodiode (7) auf einer auf dieser Oberseite des Substrates (1) aufgebrachten Filterschicht (3) angeordnet sind,
bei der diese Filterschicht (3) Filter enthält, die zwischen der Laserdiode (6) und dem Substrat (1) und zwischen der Fotodiode (7) und dem Substrat (1) angeordnet sind,
bei der der zwischen der Laserdiode (6) und dem Substrat (1) angeordnete Filter für eine Wellenlänge der von der Fotodiode (7) zu empfangenden Strahlung undurchlässig ist und
bei der der zwischen der Fotodiode (7) und dem Substrat (1) angeordnete Filter für eine Wellenlänge der von der Laserdiode (6) ausgesandten Strahlung undurchlässig ist.

6. Anordnung nach einem der Ansprüche 1 bis 5,
bei der die Laserdiode (6) und die Fotodiode (7) auf einer zwischen der Laserdiode (6) und dem Substrat (1) angeordneten Metallschicht (13) montiert sind und bei der diese Metallschicht (13) jeweils Öffnungen aufweist, um die Strahlung ungehindert passieren zu lassen.

7. Anordnung nach einem der Ansprüche 1 bis 5,
bei der die Laserdiode (6) und die Fotodiode (7) in einer auf das Substrat (1) aufgewachsenen Schichtfolge (17) integriert sind.

## Claims

1. Arrangement as a bidirectional optical transmitter and receiver module with a substrate (1) which is transparent to optical radiation, having at least two striped waveguides (41, 42), having a connection for an external waveguide (9) and having at least one laser diode (6) and a photodiode (7), in which arrangement these waveguides (41, 42) are arranged on a surface of the substrate (1) for wave guidance parallel to this surface, in which arrangement the ends of these waveguides (41, 42) are provided with mirrors (5) which are aligned such that radiation is reflected between the waveguides and subtrate, in which arrangement this connection, this laser diode (6) and this photodiode (7) are arranged on the opposite surface of the substrate (1) and aligned such that radiation coming from this external waveguide (9) or from this laser diode (6) passes in each case through the substrate (1) to one of these mirrors (5) at the end of a waveguide (42), and that radiation emanating from a waveguide (41) is reflected from one of these mirrors (5) to the photodiode (7), and in which arrangement at least one coupler (14) is provided between two waveguides (41, 42) in such a way that the connection is optically connected to the laser diode (6) and to the photodiode (7).

2. Arrangement according to Claim 1, in which a further photodiode is provided as monitor diode (8) for the laser diode (6), in which arrangement this monitor diode (8) is arranged on the same surface of the substrate (1) as the laser diode (6), and in which arrangement a portion of the radiation emitted from the laser diode (6) is reflected into this monitor diode (8) from a mirror (5) at one end of one waveguide (41).

3. Arrangement according to Claim 1 or 2, in which the laser diode (6) and the connection are optically connected via the same waveguide (42).

4. Arrangement according to Claims 1 to 3, in which the photodiode (7) and the monitor diode (8) are optically connected via the same waveguide (41).

5. Arrangement according to one of Claims 1 to 4, in which the laser diode (6) and the photodiode (7) are arranged on a filter layer (3) applied to this surface of the substrate (1), in which arrangement this filter layer (3) contains filters which are arranged between the laser diode (6) and the substrate (1) and between the photodiode (7) and the substrate (1), in which arrangement the filter arranged between the laser diode (6) and the substrate (1) is opaque to a wavelength of the radiation to be received by the photodiode (7) and in which arrangement the filter arranged between the photodiode (7) and the substrate (1) is opaque to a wavelength of the radiation emitted from the laser diode (6).

6. Arrangement according to one of Claims 1 to 5, in which the laser diode (6) and the photodiode (7) are mounted on a metal layer (13) arranged between the laser diode (6) and the substrate (1), and in which arrangement this metal layer (13) has openings in each case in order to permit the radiation to pass unimpeded.

7. Arrangement according to one of Claims 1 to 5, in which the laser diode (6) and the photodiode (7) are integrated in a layer sequence (17) grown onto the substrate (1).

## Revendications

1. Dispositif en tant que module optique émetteur-récepteur bidirectionnel, comprenant un substrat (1) perméable à un rayonnement optique, aux moins deux guides d'ondes en forme de bande (41, 42), une connexion pour un guide d'ondes externe (9) et au moins une diode laser (6) et une photodiode (7),
dans lequel ces guides d'ondes (41, 42) sont situés sur une face du substrat (1) pour conduire les ondes parallèlement à cette face,
dans lequel les extrémités de ces guides d'ondes (41, 42) sont pourvues de miroirs (5) qui sont orientés de manière à ce que le rayonnement soit réfléchi entre les guides d'ondes et le substrat,
dans lequel cette connexion, cette diode laser (6) et cette photodiode (7) sont situées sur la face opposée du substrat (1) et sont orientées de manière à ce que le rayonnement venant de ce guide d'ondes externe (9) ou de cette diode laser (6) arrive à chaque fois, à travers le substrat (1), à un de ces miroirs (5) à l'extrémité d'un guide d'ondes (42), et à ce que le rayonnement venant d'un guide d'ondes (41) soit réfléchi vers la photodiode (7) par un de ces miroirs (5), et dans lequel au moins un coupleur (14) est prévu entre deux guides d'ondes (41, 42) de manière à ce que la connexion soit reliée optiquement à la diode laser (6) et à la photodiode (7).

2. Dispositif selon la revendication 1,
dans lequel une autre photodiode est prévue en tant que diode témoin (8) pour la diode laser (6),
dans lequel cette diode témoin (8) est située sur la même face du substrat (1) que la diode laser (6) et dans lequel une partie du rayonnement émis par la diode laser (6) est réfléchie par un miroir (5) à une extrémité d'un guide d'ondes (41) pour entrer dans cette diode témoin (8)

3. Dispositif selon la revendication 1 ou 2,
dans lequel la diode laser (6) et la connexion sont reliées optiquement par le biais du même guide d'ondes (42).

4. Dispositif selon les revendications 1 à 3,
dans lequel la photodiode (7) et la diode témoin (8) sont reliées optiquement par le biais du même guide d'ondes (41).

5. Dispositif selon l'une des revendications 1 à 4,
dans lequel la diode laser (6) et la photodiode (7) sont situées sur une couche de filtres (3) appliquée sur cette face du substrat (1),
dans lequel cette couche de filtres (3) contient des filtres qui sont situés entre la diode laser (6) et le substrat (1) et entre la photodiode (7) et le substrat (1),
dans lequel le filtre situé entre la diode laser (6) et le substrat (1) est imperméable à une longueur d'onde du rayonnement devant être reçu par la photodiode (7) et
dans lequel le filtre situé entre la photodiode (7) et le substrat (1) est imperméable à une longueur d'onde du rayonnement émis par la diode laser (6).

6. Dispositif selon l'une des revendications 1 à 5,
dans lequel la diode laser (6) et la photodiode (7) sont montées sur une couche métallique (13) située entre la diode laser (6) et le substrat (1) et dans lequel cette couche métallique (13) est pourvue, à chaque fois, d'ouvertures afin de laisser passer le rayonnement sans gêne.

7. Dispositif selon l'une des revendications 1 à 5,
dans lequel la diode laser (6) et la photodiode (7) sont intégrées dans une suite de couches (17) déposées sur le substrat (1).
